# EUROPEAN PATENT APPLICATION

(11) **EP 2 650 508 A2**
(43) Date of publication of application: **16.10.2013**
(21) Application number: 13162848.9
(22) Date of filing: 09.04.2013
(51) Int. Cl.: F02C 3/34, F02C 6/18

(54) **A method and system for controlling a stoichiometric EGR system on a regenerative reheat system**

(30) Priority: 12.04.2012 US 201213444929
(71) Applicant: General Electric Company, Schenectady, New York 12345 (US)
(72) Inventor: Butkiewicz, Jeffrey John, Greenville, South Carolina 29615 (US); Simpson, Stanley Frank, Greenville, South Carolina 29615 (US); Wichmann, Lisa Anne, Greenville, South Carolina 29615 (US)
(74) Representative: Cleary, Fidelma

(57) **Abstract**

Various embodiments of the present invention provide a S-EGR process and system 100 that yields an exhaust stream 270 that includes a relatively high concentration of a desirable gas and is also substantially oxygen-free. This desirable gas includes, but is not limited to: Carbon Dioxide (CO2), Nitrogen (N2), or Argon.

## Description

The present application relates generally to a combined-cycle powerplant; and more particularly to a system and method for operating a turbomachine incorporated with stoichiometric exhaust gas recirculation (S-EGR).

In an air-ingesting turbomachine, compressed air and fuel are mixed and combusted to produce a high energy fluid (hereinafter "working fluid") that is directed to a turbine section. The working fluid interacts with turbine buckets to generate mechanical energy, which is transferred to a load. In particular, the turbine buckets rotate a shaft coupled to the load, such as an electrical generator. The shaft rotation induces current in a coil electrically coupled to an external electrical circuit. In the case where the turbomachine is part of a combined cycle power plant, the high energy fluids exiting the turbine section are directed to a heat recovery steam generator (HRSG), where heat from the working fluid is transferred to water for steam generation.

The combustion process creates undesirable emissions and/or pollutants, such as Carbon Monoxide (CO) and Oxides of Nitrogen (NOx). Reducing these pollutants is necessary for environmental and/or regulatory reasons. Exhaust gas recirculation (EGR) processes help to reduce these pollutants.

S-EGR is a form of EGR where the combustion process consumes a supplied oxidant. The oxidant can include, for example, air or an oxygen source. In a S-EGR system, only enough oxidant is supplied to combustion system to achieve complete combustion, on a mole basis. The S-EGR process can be configured to yield an exhaust stream that is substantially oxygen-free and includes a relatively high concentration of a desirable gas. This desirable gas includes, but is not limited to: Carbon Dioxide (CO2), Nitrogen (N2), or Argon. Significantly, there is a desire for S-EGR systems and methods that can generate exhaust streams with relatively high concentration of the desirable gas, which can then be supplied and used in third party processes.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In accordance with an embodiment of the present invention, a system comprises: an oxidant compressor comprising an ac_inlet and an ac_outlet; a compressor comprising a compressor inlet and a compressor outlet; wherein the compressor operates independently of the oxidant compressor; at least one combustion system that operatively generates a working fluid and comprises a head end and a discharge end, wherein the head end is fluidly connected to: the ac_outlet, the compressor outlet, and a first fuel supply; a first turbine section operatively connected to the compressor, wherein the turbine section comprises a PT_inlet which receives the working fluid from the at least one combustion system, and a PT_outlet that discharges the working fluid; an exhaust section fluidly connected to the PT_outlet; an exhaust gas recirculation (EGR) system fluidly connected between a discharge of the exhaust section and the compressor inlet such that the working fluid exiting the exhaust section is ingested by the compressor inlet; wherein the EGR system comprises a control device for adjusting a physical property of the working fluid; an extraction that removes a portion of the working fluid; wherein the control device and the compressor jointly operate in a manner that determines a pressure of the working fluid flowing through the extraction; and a heat exchanger fluidly connected to the extraction, wherein the heat exchanger transfers heat from the extraction to an operating fluid.

In accordance with an alternate embodiment of the present invention, a method comprises: operating an oxidant compressor to compress an ingested oxidant; operating a compressor to compress a working fluid, wherein the operation of the oxidant compressor is independent of the operation of the compressor; passing to at least one combustion system: a compressed oxidant, deriving from the oxidant compressor, and a compressed working fluid, deriving from the compressor; delivering a fuel to the at least one combustion system which operatively combusts a mixture of: the fuel, the compressed oxidant and the compressed working fluid; wherein the combustion system creates the working fluid; passing the working fluid from the at least one combustion system to a primary turbine section initially, and then to an exhaust section; operating an exhaust gas recirculation (EGR) system fluidly connected between a discharge of the exhaust section and the compressor inlet such that the working fluid exiting the exhaust section is ingested by the compressor inlet; passing a portion of the working fluid to an extraction; and using a heat exchanger to transfer heat from the working fluid to an operating fluid, wherein the working fluid derives from the extraction.

Various features, aspects, and advantages of the present invention may become better understood when the following detailed description is read with reference to the accompanying figures (FIGS) in which like characters represent like elements/parts throughout the FIGS. In the drawings:
FIG 1 is a simplified schematic of an embodiment of a reheat gas turbine operating in a closed-cycle mode, illustrating an environment in which the present invention may operate.
FIG 2 is a simplified schematic of an alternate embodiment of a reheat gas turbine operating in a closed-cycle mode, illustrating an environment in which the present invention may operate.
FIG 3 is a simplified schematic of a reheat gas turbine operating in a closed-cycle mode, illustrating a first embodiment of the present invention.
FIG 4 is a simplified schematic of a reheat gas turbine operating in a closed-cycle mode, illustrating a second embodiment of the present invention.
FIG 5 is a simplified schematic of a reheat gas turbine operating in a closed-cycle mode, illustrating a third embodiment of the present invention.

One or more specific embodiments of the present invention will be described below. In an effort to provide a concise description of these embodiments, all features of an actual implementation may not be described in the specification. It should be appreciated that in the development of any such actual implementation, as in an engineering or design project, numerous implementation-specific decisions are made to achieve the specific goals, such as compliance with system-related and/or business-related constraints, which may vary from one implementation to another. Moreover, it should be appreciated that such effort might be complex and time consuming, but would nevertheless be a routine undertaking of design, fabrication, and manufacture for those of ordinary skill having the benefit of this disclosure.

Detailed example embodiments are disclosed herein. However, specific structural and functional details disclosed herein are merely representative for purposes of describing example embodiments. Embodiments of the present invention may, however, be embodied in many alternate forms, and should not be construed as limited to only the embodiments set forth herein.

Accordingly, while example embodiments are capable of various modifications and alternative forms, embodiments thereof are illustrated by way of example in the figures and will herein be described in detail. It should be understood, however, that there is no intent to limit example embodiments to the particular forms disclosed, but to the contrary, example embodiments are to cover all modifications, equivalents, and alternatives falling within the scope of the present invention.

The terminology used herein is for describing particular embodiments only and is not intended to be limiting of example embodiments. As used herein, the singular forms "a", "an" and "the" are intended to include the plural forms as well, unless the context clearly indicates otherwise. The terms "comprises", "comprising", "includes" and/or "including", when used herein, specify the presence of stated features, integers, steps, operations, elements, and/or components, but do not preclude the presence or addition of one or more other features, integers, steps, operations, elements, components, and/or groups thereof.

Although the terms first, second, primary, secondary, etc. may be used herein to describe various elements, these elements should not be limited by these terms. These terms are only used to distinguish one element from another. For example, but not limiting to, a first element could be termed a second element, and, similarly, a second element could be termed a first element, without departing from the scope of example embodiments. As used herein, the term "and/or" includes any, and all, combinations of one or more of the associated listed items.

Certain terminology may be used herein for the convenience of the reader only and is not to be taken as a limitation on the scope of the invention. For example, words such as "upper", "lower", "left", "right", "front", "rear", "top", "bottom", "horizontal", "vertical", "upstream", "downstream", "fore", "aft", and the like; merely describe the configuration shown in the FIGS. Indeed, the element or elements of an embodiment of the present invention may be oriented in any direction and the terminology, therefore, should be understood as encompassing such variations unless specified otherwise.

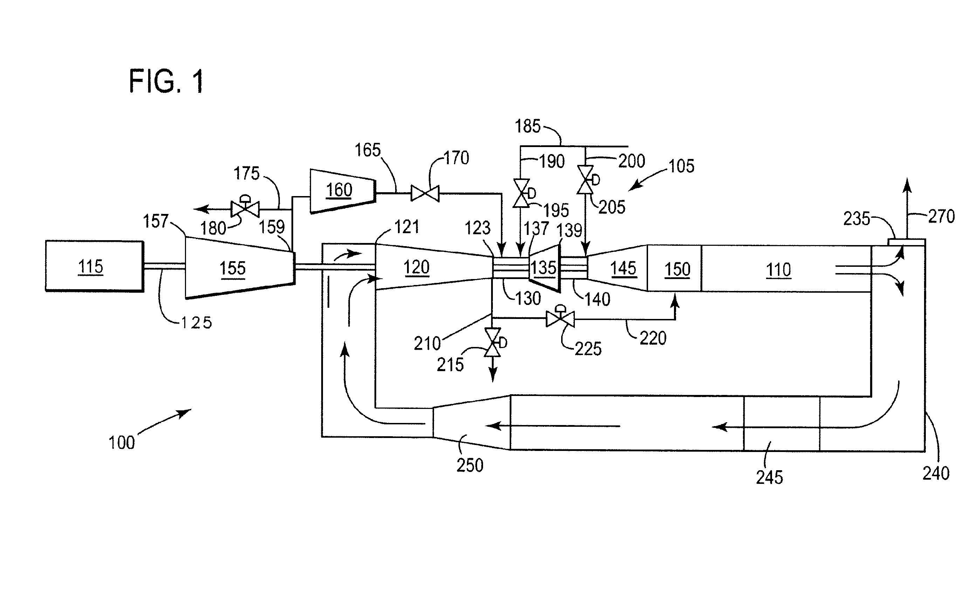

Various aspects of the present invention may be applied to a variety of air-ingesting turbomachines. This may include, but is not limiting to, heavy-duty gas turbines, aero-derivatives, or the like. Although the following discussion relates to the gas turbines illustrated in FIGS 1-5, embodiments of the present invention may be applied to a gas turbine with a different configuration. For example, but not limiting of, embodiments of the present invention may apply to a gas turbine with different, or additional, components than those illustrated in FIGS 1-5.

Embodiments of the present invention may apply to, but are not limited to, a powerplant operating under stoichiometric conditions. Here, the powerplant may have the form of a simple-cycle configuration or a combined-cycle configuration. Stoichiometric conditions may be considered operating a combustion process with only enough oxidizer, for example oxygen, to promote complete combustion, on a mole basis. Complete combustion bums a hydrocarbon-based fuel with oxygen and yields carbon dioxide and water as the primary byproducts. Many factors may influence whether complete combustion occurs. These may include, but are not limited to, oxygen in proximity to a fuel molecule, vibrations, dynamic events, shock waves, etc. In order to promote carbon dioxide formation rather than carbon monoxide formation, additional oxygen is normally delivered with the fuel supply to promote a complete combustion reaction.

Referring now to the FIGS, where the various numbers represent like components throughout the several views, FIG 1 is a simplified schematic of an embodiment of a reheat gas turbine 105 operating in a closed-cycle mode, illustrating an environment in which the present invention may operate.

In FIG 1, a site 100 includes: a reheat gas turbine 105, operatively connected to a heat recovery steam generator (HRSG) 110, a load 115, and an extraction 210 that extracts the desirable gas from a component of the reheat gas turbine 105. The reheat gas turbine 105 may include a GT compressor 120 having a compressor inlet 121 and a compressor outlet 123. The GT compressor 120 ingests recirculated exhaust gases (hereinafter "working fluid") received from the EGR system 240, compresses the working fluid, and discharges the compressed working fluid through the compressor outlet 123. The reheat gas turbine 105 may include an oxidant compressor 155 that ingests oxidant, such as, but not limiting to, ambient air, through an ac_inlet 157, compresses the same, and discharges the compressed oxidant through the ac_outlet 159. The oxidant compressor 155 may deliver the compressed oxidant to the primary combustion system 130; through an airstream conduit 165 that may include: a vent conduit 175, a vent valve 180, booster compressor 160 and isolation valve 170; each of these components may be operated as needed.

In embodiments of the present invention, the GT compressor 120 operates independently and distinct of the oxidant compressor 155. The reheat gas turbine 105 also includes a primary combustion system 130 that receives through a head end: the compressed working fluid from the GT compressor outlet 123; a fuel supply 185, comprising a first fuel conduit 190 and first fuel valve 195; and the compressed oxidant from the airstream conduit 165 (in an amount sufficient for stoichiometric combustion). The primary combustion system 130 combusts those fluids creating the working fluid, which may be substantially oxygen-free that exits the combustion system through a discharge end. The fuel supply 185, in accordance with embodiments of the present invention, may provide fuel that derives from a single source to the primary and secondary combustion systems 130,140. Alternatively, the fuel supply 185 may provide fuel that derives from a first fuel source to either the primary or secondary combustion system 130,140; and fuel that derives from a second fuel source to the other combustion system 130,140.

An embodiment of the reheat gas turbine 105, also includes a primary turbine section 135 and a secondary turbine section 145. The primary turbine section 135 may have a PT_inlet 137 that receives some of the working fluid from the primary combustion system 130 of which the PT_inlet 137 is fluidly connected. The primary turbine section 135 may include rotating components and stationary components installed alternatively in the axial direction adjacent a rotor 125. The primary turbine section 135 converts the working fluid to a mechanical torque which drives the load 115 (generator, pump, compressor, etc). The primary turbine section 135 may then discharge the working fluid, which may flow through the PT_outlet 139 to a secondary combustion system 140 to secondary turbine section 145 and to an exhaust section 150 and then to the HRSG 110, which operatively transfers heat from the working fluid to water for steam generation. The secondary turbine section 145 may comprise similar components and operate like the primary turbine section 135.

The EGR system 240 operatively returns the working fluid exiting the HRSG 110 to the GT compressor 120. The EGR system 240 receives the working fluid discharged by the HRSG 110; which is fluidly connected to a receiving or upstream end of the EGR system 240. A discharge end of the EGR system 240 may be fluidly connected to the inlet of the GT compressor 120, as described. An embodiment of the EGR system 240 comprises a control device that operatively adjusts a physical property of the working fluid. The control device may have the form of a heat exchanger 245, or an EGR compressor 250. As discussed below, embodiments of the EGR system 240 may comprise multiple control devices. The EGR system 240 may also comprise a damper 235 which facilitates a purging process.

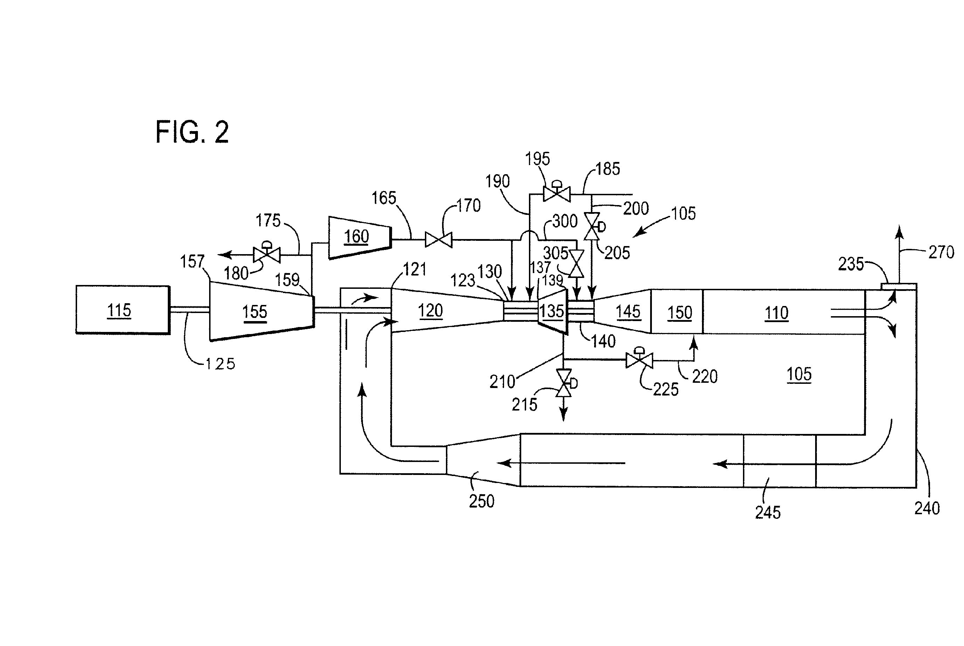

The extraction 210 operationally removes a portion of the working fluid for use by a third-party process. The extraction 210 may be integrated with a circuit that comprises an extraction isolation valve 215, a recirculation conduit 220 and a recirculation valve 225. The extracted working fluid may be a substantially oxygen-free gas desirable for many third-party processes, as described. As illustrated in FIGS 1 and 2, embodiments of the present invention may position the extraction 210 at, or in, the GT compressor 120, the primary combustion system 130, or the primary turbine section 135. Here, the working fluid may exhibit a relatively higher pressure, useful for high pressure applications. These applications may include, but are not limited to: a carbon capture system (CCS), or other applications that seek a high pressure, substantially oxygen-free, desirable gas.

The above discussion, in relation to FIG 1, describes the basic concept of a reheat gas turbine 105 configured for S-EGR operation. For convenience, components and elements that correspond to those identified in FIG 1 are identified with similar reference numerals in FIGS 2-5, but are only discussed in particular as necessary or desirable to an understanding of each embodiment. Embodiments of the present invention include a variety of configurations, some of which may not be illustrated in the FIGS. The following non-limiting examples are within the scope and spirit of embodiments of the present invention. Some configurations may position the extraction 210 downstream of the secondary combustion system 140. Here, the oxidant may enter either the primary and secondary combustion systems 130,140 or solely the primary combustion system 130. In this configuration, the secondary combustion system 140 may operate in a substantially stoichiometric mode. Other configurations may position the extraction adjacent to the primary turbine section 135. Here, the oxidant may enter the primary and secondary combustion systems 130,140. In this configuration, the primary combustion system 130 may operate in a substantially stoichiometric mode.

FIG 2 is a simplified schematic of an alternate embodiment of a reheat gas turbine 105 operating in a closed-cycle mode, illustrating an environment in which the present invention may operate. The primary differences between the reheat gas turbine 105 in FIG 2 and FIG 1 are the location of the extraction 210; and the additional oxidant supply circuit 300 and isolation valve 305. Here, the extraction 210 is located at a discharge of the primary turbine 135 (as illustrated in FIG 2). In this configuration the additional oxidant supply circuit 300 may function to supply compressed ambient air to the head end of the secondary combustion system 140; which may be integrated with a second fuel conduit and valve 200,205, respectively. As illustrated in FIG 2, the additional oxidant supply circuit 300 may be integrated with the circuit that supplies the compressed oxidant stream to the primary combustion system 130. Here, the circuit may be fluidly connected to the ac_outlet 159, and a first downstream end may be connected to the head end of the primary combustion system 130; and a second downstream end may be connected to the head end of the secondary combustion system 140.

Embodiments of the present invention provide a way to reduce the temperature of the working fluid flowing through the extraction 210. The heat removed from the working fluid is used to heat an operating fluid, such as, but not limited to, the compressed air stream that derives from the oxidant compressor 155; or the fuel deriving from the fuel supply 185. These features of the present invention may increase the overall efficiency of the reheat gas turbine 105; while providing the benefit of controlling the temperature of the extracted working fluid.

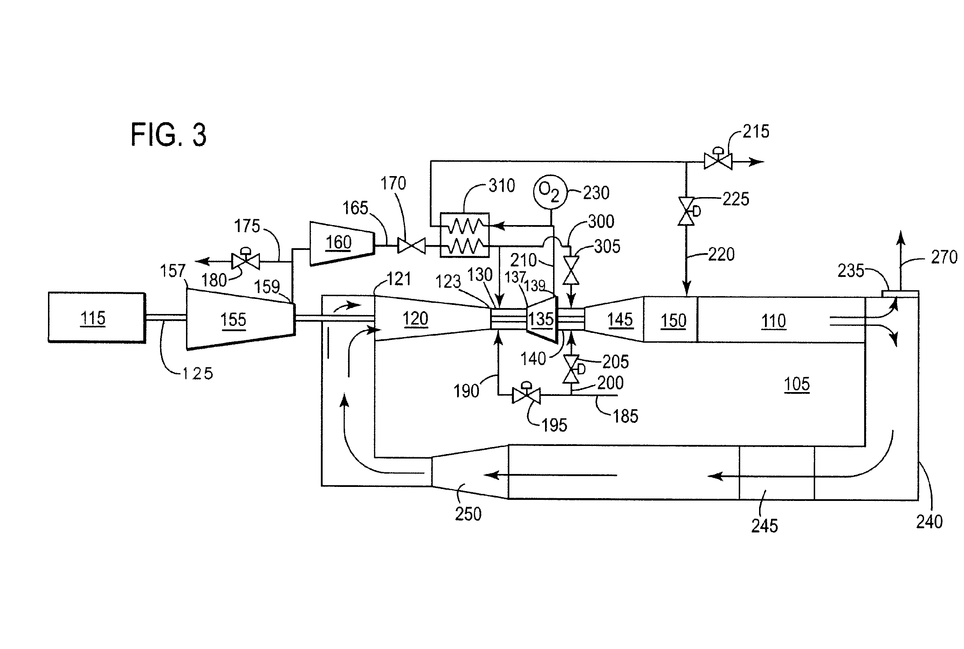

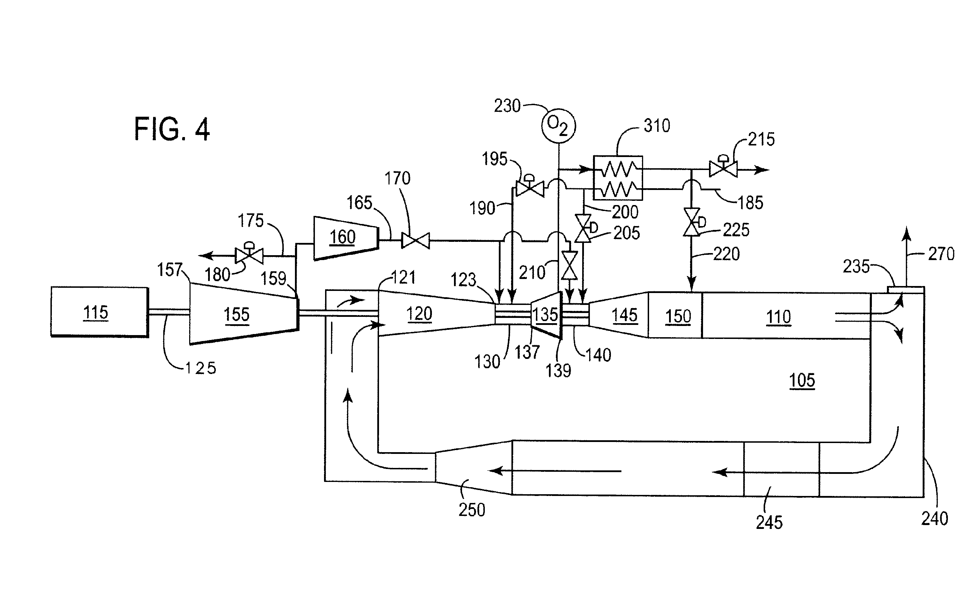

FIG 3 is a simplified schematic of a reheat gas turbine 105 operating in a closed-cycle mode, illustrating a first embodiment of the present invention. FIG 4 is a simplified schematic of a reheat gas turbine 105 operating in a closed-cycle mode, illustrating a second embodiment of the present invention.

As illustrated in FIGS 3, 4, embodiments of the present invention use a heat exchanger 310 to transfer heat from the working fluid to the operating fluid. The heat exchanger 310 may be fluidly connected to the extraction 210. A hot side of the heat exchanger 310 may be located in a flow stream between the extraction 210 and the third-party process that receives the extracted working fluid. In an embodiment of the present invention, a cold side of the heat exchanger 310 may be located in a flow stream between the ac_outlet 159 and the head end of the primary combustion system 130 and a head end of a secondary combustion system 140. This configuration is illustrated in FIG 3.

In an alternate embodiment of the present invention, a cold side of the heat exchanger 310 may be located in a flow stream between a fuel supply 185 and the head end of the primary combustion system 130 and a head end of a secondary combustion system 140. This configuration is illustrated in FIG 4.

In use, embodiments of the present invention may operate in conjunction with operations of the reheat gas turbine 105, as described in relation to FIGS 1,2. In a first embodiment of the present invention, the compressed oxidant may be passed through a cold side of the heat exchanger 310; and the extracted working fluid may be passed through an inlet of a hot side of the heat exchanger 310. Next, a portion of the compressed oxidant exiting the cold side of the heat exchanger 310 may be passed to a head end of the primary combustion system 130. Next, in a nearly simultaneous manner the remaining portion of the compressed oxidant exiting the cold side of the heat exchanger 310 may be passed to a head end of a secondary combustion system 140. Next, the working fluid exiting the hot side of the heat exchanger 310 may be passed through an outlet to a third-party process; which may include, but is not limited to, a carbon capture system.

In a second embodiment of the present invention, the fuel may be passed through an inlet of a cold side of the heat exchanger 310; and the extracted working fluid may be passed through an inlet of the hot side of the heat exchanger 310. Next, a portion of the fuel exiting the cold side of the heat exchanger 310 may be passed through an outlet to a head end of the primary combustion system 130. Next, in a nearly simultaneous manner, the remaining portion of the fuel exiting the cold side of the heat exchanger 310 may be passed through an outlet to a head end of a secondary combustion system 140. Next, the working fluid exiting the hot side of the heat exchanger 310 may be passed through an outlet to a third-party process.

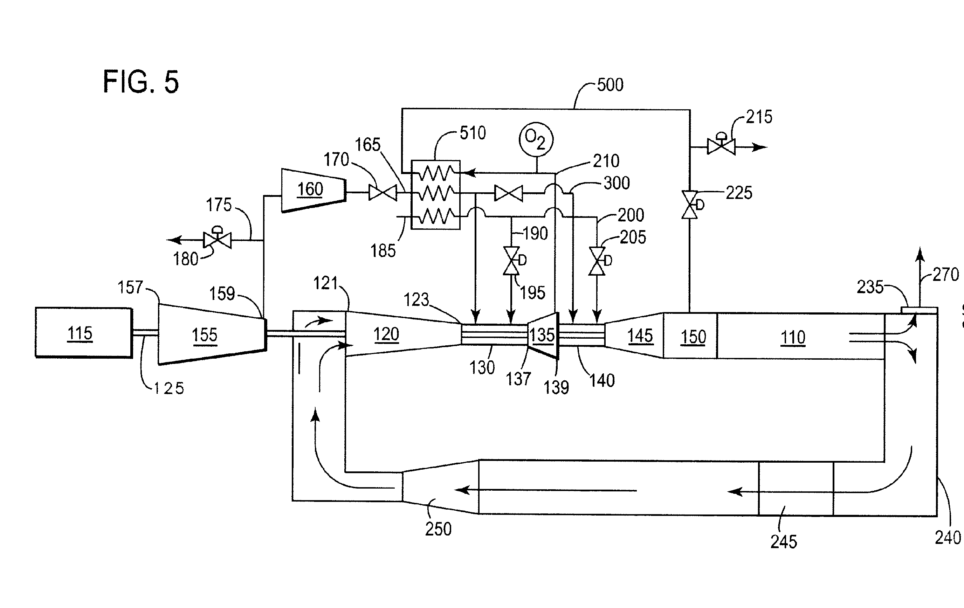

FIG 5 is a simplified schematic of a reheat gas turbine 105 operating in a closed-cycle mode, illustrating a third embodiment of the present invention. Here, a cold side of a heat exchanger 510 may be located in a flow stream between the ac_outlet 159 and the head end of the primary combustion system 130 and a head end of a secondary combustion system 140. The cold side of the heat exchanger 510 may also be located in a flow stream between the fuel supply 185 and the head end of the primary combustion system 130 and a head end of a secondary combustion system 140.

Although specific embodiments have been illustrated and described herein, those of ordinary skill in the art appreciate that any arrangement, which is calculated to achieve the same purpose, may be substituted for the specific embodiments shown and that the invention has other applications in other environments. This application is intended to cover any adaptations or variations of the present invention. The following claims are in no way intended to limit the scope of the invention to the specific embodiments described herein.

As one of ordinary skill in the art will appreciate, the many varying features and configurations described above in relation to the several embodiments may be further selectively applied to form other possible embodiments of the present invention. Those skilled in the art will further understand that all possible iterations of the present invention are not provided or discussed in detail, even though all combinations and possible embodiments embraced by the several claims below or otherwise are intended to be part of the instant application. In addition, from the above description of several embodiments of the invention, those skilled in the art will perceive improvements, changes, and modifications. Such improvements, changes, and modifications within the skill of the art are also intended to be covered by the appended claims. Further, it should be apparent that the foregoing relates only to the described embodiments of the present application and that numerous changes and modifications may be made herein without departing from the spirit and scope of the application as defined by the following claims and the equivalents thereof.

Various aspects and embodiments of the present invention are defined by the following numbered clauses:
1. A system comprising:
   an oxidant compressor comprising an ac_inlet and an ac_outlet;
   a compressor comprising a compressor inlet and a compressor outlet; wherein the compressor operates independently of the oxidant compressor;
   at least one combustion system that operatively generates a working fluid and comprises a head end and a discharge end, wherein the head end is fluidly connected to: the ac_outlet, the compressor outlet, and a first fuel supply;
   a first turbine section operatively connected to the compressor, wherein the turbine section comprises a PT_inlet which receives the working fluid from the at least one combustion system, and a PT_outlet that discharges the working fluid;
   an exhaust section fluidly connected to the PT_outlet;
   an exhaust gas recirculation (EGR) system fluidly connected between a discharge of the exhaust section and the compressor inlet such that the working fluid exiting the exhaust section is ingested by the compressor inlet; wherein the EGR system comprises a control device for adjusting a physical property of the working fluid;
   an extraction that removes a portion of the working fluid; wherein the control device and the compressor jointly operate in a manner that determines a pressure of the working fluid flowing through the extraction; and
   a heat exchanger fluidly connected to the extraction, wherein the heat exchanger transfers heat from the extraction to an operating fluid.
2. The system of clause 1, wherein the control device comprises at least one of:
   a compressor, or a heat exchanger.
3. The system of any preceding clause, further comprising a secondary combustion system fluidly connected downstream of the first turbine section, wherein the secondary combustion system receives fuel from a second fuel supply.
4. The system of any preceding clause, further comprising a second turbine section connected downstream of the secondary combustion system and upstream of the exhaust section.
5. The system of any preceding clause, wherein the operating fluid comprises fuel or compressed oxidant.
6. The system of any preceding clause, wherein the fuel supply provides fuel to the primary combustion system and/or a secondary combustion system.
7. The system of any preceding clause, wherein a hot side of the heat exchanger is located in a flow stream between the extraction and a process that receives the extraction.
8. The system of any preceding clause, wherein a cold side of the heat exchanger is located in a flow stream between the ac_outlet and the head end of the primary combustion system and a head end of a secondary combustion system.
9. The system of any preceding clause, wherein a cold side of the heat exchanger is located in a flow stream between a fuel supply and the head end of the primary combustion system and a head end of a secondary combustion system.
10. The system of any preceding clause, further comprising a heat recovery steam generator (HRSG) fluidly connected to the discharge of the exhaust section, wherein the HRSG operatively removes heat from the working fluid and then discharges the working fluid.
11. The system of any preceding clause, wherein the EGR system is fluidly integrated with the compressor inlet in a manner that supports a substantially stoichiometric operating condition.
12. The system of any preceding clause, wherein the extraction is fluidly connected to a downstream process.
13. The system of any preceding clause, wherein a cold side of the heat exchanger is located in a flow stream between the ac_outlet and the head end of the primary combustion system and a head end of a secondary combustion system; and wherein the cold side of the heat exchanger is also located in a flow stream between a fuel supply and the head end of the primary combustion system and a head end of a secondary combustion system.
14. A method comprising :
   a. operating an oxidant compressor to compress an ingested oxidant;
   b. operating a compressor to compress a working fluid, wherein the operation of the oxidant compressor is independent of the operation of the compressor;
   c. passing to at least one combustion system: a compressed oxidant, deriving from the oxidant compressor, and a compressed working fluid, deriving from the compressor;
   d. delivering a fuel to the at least one combustion system which operatively combusts a mixture of: the fuel, the compressed oxidant and the compressed working fluid; wherein the combustion system creates the working fluid;
   e. passing the working fluid from the at least one combustion system to a primary turbine section initially, and then to an exhaust section;
   f. operating an exhaust gas recirculation (EGR) system fluidly connected between a discharge of the exhaust section and the compressor inlet such that the working fluid exiting the exhaust section is ingested by the compressor inlet;
   g. passing a portion of the working fluid to an extraction; and
   h. using a heat exchanger to transfer heat from the working fluid to an operating fluid, wherein the working fluid derives from the extraction.
15. The method of any preceding clause, wherein the operating fluid comprises fuel from a fuel supply or compressed oxidant deriving from the oxidant compressor.
16. The method of any preceding clause, further comprising passing the compressed oxidant through a cold side of the heat exchanger; and passing extracted working fluid through an inlet of a hot side of the heat exchanger.
17. The method of any preceding clause, further comprising passing a portion of the compressed oxidant to a head end of the at least one combustion system; wherein the portion of the compressed oxidant is exiting the cold side of the heat exchanger.
18. The method of any preceding clause, further comprising passing a remaining portion of the compressed oxidant to a head end of a secondary combustion system; wherein the remaining portion of the compressed oxidant is exiting the cold side of the heat exchanger.
19. The method of any preceding clause, further comprising passing the working fluid to a third-party process; wherein the working fluid is exiting the hot side of the heat exchanger through an outlet.
20. The method of any preceding clause, further comprising passing the fuel through an inlet of a cold side of the heat exchanger; and passing extracted working fluid through an inlet of hot side of the heat exchanger.
21. The method of any preceding clause, further comprising passing a portion of the fuel to a head end of the at least one combustion system; wherein the portion of the fuel is exiting the cold side of the heat exchanger through an outlet.
22. The method of any preceding clause, further comprising passing a remaining portion of the fuel to a head end of a secondary combustion system; wherein the remaining portion is exiting the cold side of the heat exchanger through an outlet.
23. The method of any preceding clause, further comprising passing the working fluid to a third-party process; wherein the working fluid is exiting the hot side of the heat exchanger through an outlet.
24. The method of any preceding clause, further comprising operating a HRSG fluidly connected to the discharge of the exhaust section and an intake of the EGR system, wherein the HRSG operatively removes heat from the working fluid and then discharges the working fluid to the EGR system.
25. The method of any preceding clause, further comprising operating a combustion system immediately adjacent the extraction in a manner that supports a substantially stoichiometric operating condition.
26. The method of any preceding clause, further comprising:
   a. passing a portion of the compressed oxidant to a head end of the at least one combustion system; wherein the portion of the compressed oxidant is exiting the cold side of the heat exchanger; and
   b. a remaining portion of the compressed oxidant to a head end of a secondary combustion system; wherein the remaining portion of the compressed oxidant is exiting the cold side of the heat exchanger.

## Claims

1. A system (100) comprising:
an oxidant compressor (155) comprising an ac_inlet and an ac_outlet;
a compressor (120) comprising a compressor inlet and a compressor outlet; wherein the compressor operates independently of the oxidant compressor;
at least one combustion system (130) that operatively generates a working fluid and comprises a head end and a discharge end, wherein the head end is fluidly connected to: the ac_outlet, the compressor outlet, and a first fuel supply;
a first turbine section (105) operatively connected to the compressor, wherein the turbine section comprises a PT_inlet which receives the working fluid from the at least one combustion system, and a PT_outlet that discharges the working fluid;
an exhaust section (150) fluidly connected to the PT_outlet;
an exhaust gas recirculation (EGR) system (240) fluidly connected between a discharge of the exhaust section (150) and the compressor inlet such that the working fluid exiting the exhaust section is ingested by the compressor inlet; wherein the EGR system comprises a control device for adjusting a physical property of the working fluid;
an extraction (210) that removes a portion of the working fluid; wherein the control device and the compressor jointly operate in a manner that determines a pressure of the working fluid flowing through the extraction; and
a heat exchanger (245) fluidly connected to the extraction, wherein the heat exchanger transfers heat from the extraction to an operating fluid.

2. The system (100) of claim 1, wherein the control device comprises at least one of: a compressor, or a heat exchanger.

3. The system (100) of any preceding claim, further comprising a secondary combustion system (140) fluidly connected downstream of the first turbine section, wherein the secondary combustion system receives fuel from a second fuel supply.

4. The system (100) of claim 3 further comprising a second turbine section (145) connected downstream of the secondary combustion system (140) and upstream of the exhaust section.

5. The system (100) of any preceding claim, wherein a hot side of the heat exchanger (245) is located in a flow stream between the extraction and a process that receives the extraction (210).

6. The system (100) of any preceding claim, wherein a cold side of the heat exchanger (245) is located in a flow stream between the ac_outlet and the head end of the primary combustion system (130) and a head end of a secondary combustion system (140).

7. The system (100) of any preceding claim, wherein a cold side of the heat exchanger (245) is located in a flow stream between a fuel supply and the head end of the primary combustion system (130) and a head end of a secondary combustion system (140).

8. The system (100) of any preceding claim, further comprising a heat recovery steam generator (HRSG) (110) fluidly connected to the discharge of the exhaust section (150), wherein the HRSG operatively removes heat from the working fluid and then discharges the working fluid.

9. The system (100) of any preceding claim, wherein the EGR system (240) is fluidly integrated with the compressor inlet in a manner that supports a substantially stoichiometric operating condition.

10. The system (100) of any preceding claim, wherein the extraction (210) is fluidly connected to a downstream process.

11. The system (100) of any preceding claim, wherein a cold side of the heat exchanger (245) is located in a flow stream between the ac_outlet and the head end of the primary combustion system and a head end of a secondary combustion system; and wherein the cold side of the heat exchanger is also located in a flow stream between a fuel supply and the head end of the primary combustion system and a head end of a secondary combustion system.

12. A method comprising:
a. operating an oxidant compressor (155) to compress an ingested oxidant;
b. operating a compressor (120) to compress a working fluid, wherein the operation of the oxidant compressor is independent of the operation of the compressor;
c. passing to at least one combustion system (130): a compressed oxidant, deriving from the oxidant compressor, and a compressed working fluid, deriving from the compressor;
d. delivering a fuel to the at least one combustion system (130) which operatively combusts a mixture of: the fuel, the compressed oxidant and the compressed working fluid; wherein the combustion system creates the working fluid;
e. passing the working fluid from the at least one combustion system (130) to a primary turbine section (105) initially, and then to an exhaust section (150);
f. operating an exhaust gas recirculation (EGR) system (240) fluidly connected between a discharge of the exhaust section (150) and the compressor inlet such that the working fluid exiting the exhaust section is ingested by the compressor inlet;
g. passing a portion of the working fluid to an extraction (210); and
h. using a heat exchanger (245) to transfer heat from the working fluid to an operating fluid, wherein the working fluid derives from the extraction.

13. The method of claim 12, wherein the operating fluid comprises fuel from a fuel supply or compressed oxidant deriving from the oxidant compressor (155).

14. The method of claim 12 or claim 13, further comprising passing the compressed oxidant through a cold side of the heat exchanger (245); and passing extracted working fluid through an inlet of a hot side of the heat exchanger (245).

15. The method of any of claims 12 to 14, further comprising passing a portion of the compressed oxidant to a head end of the at least one combustion system (130); wherein the portion of the compressed oxidant is exiting the cold side of the heat exchanger (245).
